# EUROPEAN PATENT APPLICATION

(11) **EP 4 793 687 A1**
(43) Date of publication of application: **19.08.2026**
(21) Application number: 26158761.2
(22) Date of filing: 16.02.2026
(51) Int. Cl.: G02B 26/12, G03G 15/04, G03G 21/16

(54) **OPTICAL SCANNING DEVICE AND IMAGE FORMING APPARATUS INCLUDING SAME**

(30) Priority: 17.02.2025 JP 2025023559
(71) Applicant: Kyocera Document Solutions Inc., Osaka-shi, Osaka 540-8585 (JP)
(72) Inventor: Mori, Hayato, Osaka, 540-8585 (JP); Yoshida, Shingo, Osaka, 540-8585 (JP); Mizutani, Hideji, Osaka, 540-8585 (JP)
(74) Representative: BRP Renaud & Partner mbB Rechtsanwälte Patentanwälte Steuerberater

(57) **Abstract**

A circuit board has a mounting hole in which terminals of a laser diode are inserted, the terminals extending to the side opposite to a laser beam emitting direction. A peripheral wall portion has a guide member. The guide member protrudes from an outer circumferential surface and is inserted into a board insertion hole formed in the circuit board. A distal end of the guide member is positioned on an opposite side of the laser beam emitting direction with respect to a distal end of the laser diode terminal.

## Description

### BACKGROUND

The present disclosure relates to an optical scanning device and an image forming apparatus including the same.

A conventional optical scanning device includes an optical source unit, a polygon mirror, and a casing. The optical source unit emits a laser beam. The polygon mirror rotates about a rotation axis extending in the up and down direction and reflects the laser beam emitted from the optical source unit, so as to scan a circumferential surface of an image carrier in a main scanning direction. The casing houses a polygon mirror. The casing includes a bottom wall portion and a peripheral wall portion. The bottom wall portion extends in a direction crossing the rotation axis of the polygon mirror. The peripheral wall portion protrudes from the periphery of the bottom wall portion so as to surround the polygon mirror from outside in a radial direction.

The optical source unit includes a laser diode and a circuit board. The laser diode has a plurality of light emission points for emitting the laser beams, and is fixed to an outer circumferential surface of the peripheral wall portion. The laser diode is mounted on the circuit board.

In the conventional optical scanning device, after adjusting an optical axis and a position of the laser diode, when mounting the laser diode on the circuit board, positioning between the laser diode and the circuit board may be difficult, and assembling workability may decrease.

In view of the above problem, it is an object of the present disclosure to provide an optical scanning device and an image forming apparatus including the same that can improve assembling workability.

### SUMMARY

In order to achieve the above object, a first structure of the present disclosure includes an optical source unit, a polygon mirror, and a casing. The optical source unit emits a laser beam. The polygon mirror rotates about a rotation axis extending and reflects the laser beam emitted from the optical source unit, so as to scan a circumferential surface of an image carrier in a main scanning direction. The casing houses a polygon mirror. The casing includes a bottom wall portion and a peripheral wall portion. The bottom wall portion extends in a direction crossing the rotation axis of the polygon mirror. The peripheral wall portion protrudes from a periphery of the bottom wall portion so as to surround the polygon mirror from outside in a radial direction. The laser diode has a plurality of light emission points for emitting the laser beams, and is fixed to an outer circumferential surface of the peripheral wall portion. A circuit board has a mounting hole for inserting terminals of the laser diode extending in a direction opposite to the laser beam emitting direction. The peripheral wall portion includes a guide member. The guide member protrudes from the outer circumferential surface, so as to be inserted in a board insertion hole formed in the circuit board. A distal end of the guide member is positioned on an opposite side of the laser beam emitting direction with respect to a distal end of the laser diode terminal.

According to the first structure of the present disclosure, it is possible to provide an optical scanning device and an image forming apparatus including the same that can improve assembling workability.

### BRIEF DESCRIPTION OF THE DRAWINGS

FIG. 1 is a schematic cross-sectional view illustrating an inner structure of an image forming apparatus 100 according to one embodiment of the present disclosure.
FIG. 2 is a top view of an optical scanning device 5 according to one embodiment of the present disclosure.
FIG. 3 is a cross-sectional side view illustrating an inner structure of the optical scanning device 5 according to one embodiment of the present disclosure.
FIG. 4 is an exploded perspective view of an optical source unit 26 of the optical scanning device 5 according to the present disclosure.
FIG. 5 is an enlarged perspective view of the optical source unit 26 and its vicinity of the optical scanning device 5 according to the present disclosure.
FIG. 6 is an enlarged perspective view of the optical source unit 26 and its vicinity of the optical scanning device 5 according to the present disclosure.
FIG. 7 is an enlarged perspective view of the optical source unit 26 and its vicinity of the optical scanning device 5 according to the present disclosure.
FIG. 8 is an enlarged perspective view of the optical source unit 26 and its vicinity of the optical scanning device 5 according to the present disclosure.
FIG. 9 is an enlarged perspective view of a laser diode 261a and its vicinity of the optical scanning device 5 according to the present disclosure.
FIG. 10 is an enlarged cross-sectional side view illustrating the laser diode 261a and its vicinity of the optical scanning device 5 according to the present disclosure.
FIG. 11 is an enlarged cross-sectional side view illustrating guide members 3931 and its vicinity of the optical scanning device 5 according to the present disclosure.

### DETAILED DESCRIPTION

### [1. Structure of Image Forming Apparatus 100]

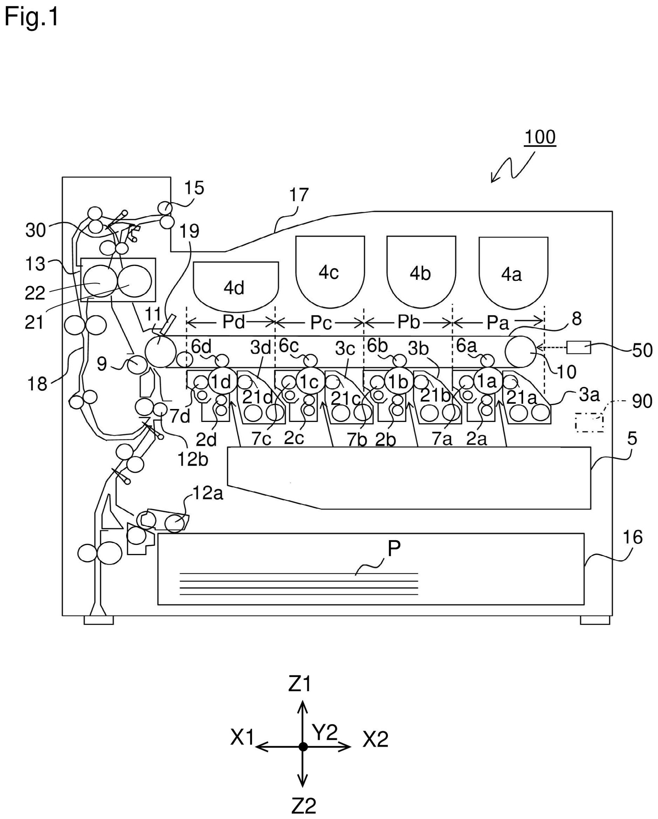

Hereinafter, with reference to the drawings, an embodiment of the present disclosure is described. FIG. 1 is a schematic cross-sectional view illustrating an overall structure of an image forming apparatus 100, in which an optical scanning device 5 according to the present disclosure is mounted. For convenience sake of description, in a state where the image forming apparatus 100 is usably installed (in the state illustrated in FIG. 1), the vertical direction is defined as the up and down direction (Z1-Z2 direction). In addition, in FIG. 1, the front side of the page is defined as the front of the image forming apparatus 100 so as to define the front and back direction (Y1-Y2 direction). In addition, with respect to the front of the image forming apparatus 100 in the installed state, the left and right direction (X1-X2 direction) is defined. In this embodiment, the left and right direction (X1-X2 direction) is perpendicular to the up and down direction (Z1-Z2 direction) and the front and back direction (Y1-Y2 direction).

The image forming apparatus 100 is a tandem type color printer, and includes image forming units Pa, Pb, Pc, and Pd, the optical scanning device 5, photosensitive drums (image carriers) 1a to 1d, charging devices 2a to 2d, developing devices 3a to 3d, primary transfer rollers 6a to 6d, a secondary transfer roller 9, a paper sheet cassette 16, a fixing device 13, an image density sensor 50, and a control unit 90.

The four image forming units Pa, Pb, Pc, and Pd are disposed in a main body of the image forming apparatus 100, in order from an upstream side in a conveying direction (from the right side in FIG. 1). The image forming units Pa to Pd are disposed corresponding to four different color images (yellow, magenta, cyan, and black images), so as to form yellow, magenta, cyan, and black images, respectively, by charging, exposing, developing, and transferring steps.

In each of the photosensitive drums 1a to 1d, an organic photoreceptor (OPC) on which an organic photosensitive layer is formed, an amorphous silicon photoreceptor on which an amorphous silicon photosensitive layer is formed, or the like is used. The photosensitive drums 1a to 1d are disposed corresponding to the yellow, magenta, cyan, and black colors, in a tandem manner.

Around the photosensitive drum (image carrier) 1a, the developing device 3a, the charging device 2a, and a cleaning device 7a are arranged. In the same manner, around the photosensitive drums 1b to 1d, the developing devices 3b to 3d, the charging devices 2b to 2d, and cleaning devices 7b to 7d are respectively arranged. In addition, the optical scanning device 5 is disposed below the developing devices 3a to 3d.

The developing devices 3a to 3d are disposed to face the photosensitive drums (image carriers) 1a to 1d, respectively, and include developing rollers (developer carriers) 21a to 21d, respectively. The developing devices 3a to 3d apply the developing rollers (developer carriers) 21a to 21d with predetermined developing voltages, respectively, and toner is adhered to electrostatic latent images formed on the photosensitive drums (image carriers) 1a to 1d so as to form toner images. The developing devices 3a to 3d respectively face the photosensitive drums 1a to 1d, so as to supply the toner to the photosensitive drums 1a to 1d. The developing devices 3a to 3d are provided with containers 4a to 4d, which store magenta, cyan, yellow, and black color toners, respectively.

The charging devices 2a to 2d are disposed on the upstream side of the developing devices 3a to 3d, respectively, in a rotation direction of the photosensitive drums 1a to 1d, so as to face surfaces of the photosensitive drums 1a to 1d, respectively. The charging devices 2a to 2d uniformly charge the surfaces of the photosensitive drums 1a to 1d, respectively.

The cleaning devices 7a to 7d remove developer (the toner) and the like remaining on the photosensitive drums 1a to 1d, respectively.

In this embodiment, the optical scanning device 5 is disposed below the photosensitive drums 1a to 1d. The optical scanning device 5 emits light to (scans with light) the surfaces of the photosensitive drums 1a to 1d charged uniformly by the charging devices 2a to 2d, on the basis of image data of characters or pictures input from a personal computer or the like to an image input unit. In this way, electrostatic latent images are formed on the surfaces of the photosensitive drums 1a to 1d.

An intermediate transfer belt (a belt) 8 is disposed adjacent to the image forming units Pa to Pd. The toner images formed on the photosensitive drums 1a to 1d are primarily transferred and superimposed onto the intermediate transfer belt 8 in turn, which moves while contacting the photosensitive drums 1a to 1d.

The toner images transferred primarily onto the intermediate transfer belt 8 are secondarily transferred by the secondary transfer roller 9 onto a paper sheet P (recording medium) as an example of a recording medium. Furthermore, the paper sheet P onto which the toner images are secondarily transferred is processed in the fixing device 13 so that the toner images are fixed, and then is discharged from the main body of the image forming apparatus 100.

The paper sheet P onto which the toner images are to be secondarily transferred is stored in the paper sheet cassette 16, which is disposed in a lower part of the main body of the image forming apparatus 100, and is conveyed to a nip part between the secondary transfer roller 9 and a driving roller 11 of the intermediate transfer belt 8, via a paper feed roller 12a and a registration roller pair 12b. In addition, on the downstream side of the secondary transfer roller 9, disposed is a blade-like belt cleaner 19 for removing the toner and the like remaining on the surface of the intermediate transfer belt 8.

When image data is input from a host device such as a personal computer, the charging devices 2a to 2d first uniformly charge the surfaces of the photosensitive drums 1a to 1d. Next, the optical scanning device 5 emits light in accordance with image data, so as to form an electrostatic latent image on each of the photosensitive drums 1a to 1d in accordance with the image data. The developing devices 3a to 3d store predetermined amount of two-component developers containing yellow, magenta, cyan, and black color toners, respectively. Note that if the ratio of the toner to the two-component developer decreases below a specified value in the developing device 3a to 3d, along with formation of the toner image as described later, the toner is replenished from the container 4a to 4d to the developing device 3a to 3d. The toner in the developer is supplied from the developing device 3a to 3d to the photosensitive drum 1a to 1d, so as to be adhered to the same in an electrostatic manner. In this way, the toner image is formed corresponding to the electrostatic latent image formed by exposure by the optical scanning device 5.

Further, the primary transfer roller 6a to 6d applies an electric field with a predetermined transfer voltage, between the primary transfer roller 6a to 6d and the photosensitive drum 1a to 1d, and hence the yellow, magenta, cyan, and black toner images on the photosensitive drums 1a to 1d are primarily transferred onto the intermediate transfer belt 8. These four color images are formed with a predetermined positional relationship for forming a predetermined full color image. After that, as preparation for formation of a new electrostatic latent image that will be performed next, the cleaning devices 7a to 7d remove the toner and the like remaining on the surfaces of the photosensitive drums after the primary transfer, respectively.

The intermediate transfer belt 8 is stretched around a driven roller 10 on the upstream side and the driving roller 11 on the downstream side. When the intermediate transfer belt 8 starts to rotate in a clockwise direction, along with rotation of the driving roller 11 driven by a belt driving motor (not shown), the paper sheet P is conveyed from the registration roller pair 12b at a predetermined timing, to a nip part between the driving roller 11 and the secondary transfer roller 9 disposed adjacent to the same (a secondary transfer nip part), and hence the full color image on the intermediate transfer belt 8 is secondarily transferred onto the paper sheet P. The paper sheet P onto which the toner image is secondarily transferred is conveyed to the fixing device 13.

The image density sensor 50 faces the driven roller 10 with the intermediate transfer belt 8 between them. The image density sensor 50 is, for example, a specular reflection type sensor for detecting reflected light. The image density sensor 50 converts a measurement result into an electric signal, and outputs the same to the control unit 90 described later. Note that it is sufficient that the image density sensor 50 is a sensor that can detect density information of the toner image, and may be a sensor that can detect the density from an image obtained by capturing the toner image, for example.

The paper sheet P conveyed to the fixing device 13 is heated and pressed by a fixing belt 21 and a pressure roller 22 so that the toner image is fixed to the surface of the paper sheet P, and hence a predetermined full color image is formed. The conveying direction of the paper sheet P on which the full color image is formed is selected by a branch unit 30 that branches in directions, and the paper sheet P is discharged onto a discharge tray 17 by a discharge roller pair 15 as it is (or after being conveyed to a both-side conveying path 18 and after forming images on both sides).

The control unit 90 integrally controls the image forming apparatus 100. Specifically, the control unit 90 controls the image forming unit. The image forming unit includes the optical scanning device 5, the photosensitive drums (image carriers) 1a to 1d, the charging devices 2a to 2d, and the developing devices 3a to 3d.

### [2. Structure of Optical Scanning Device]

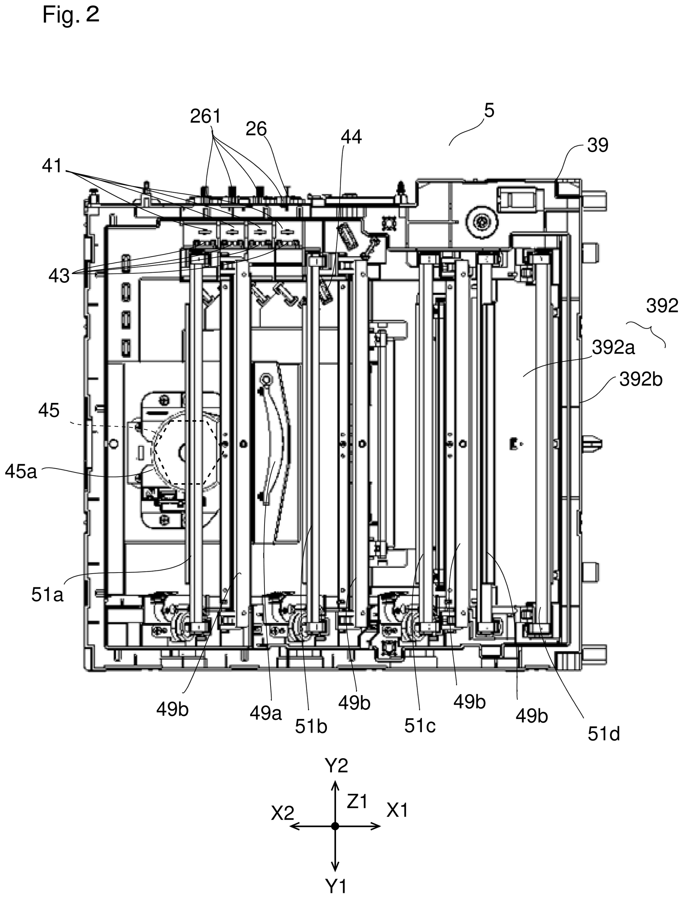

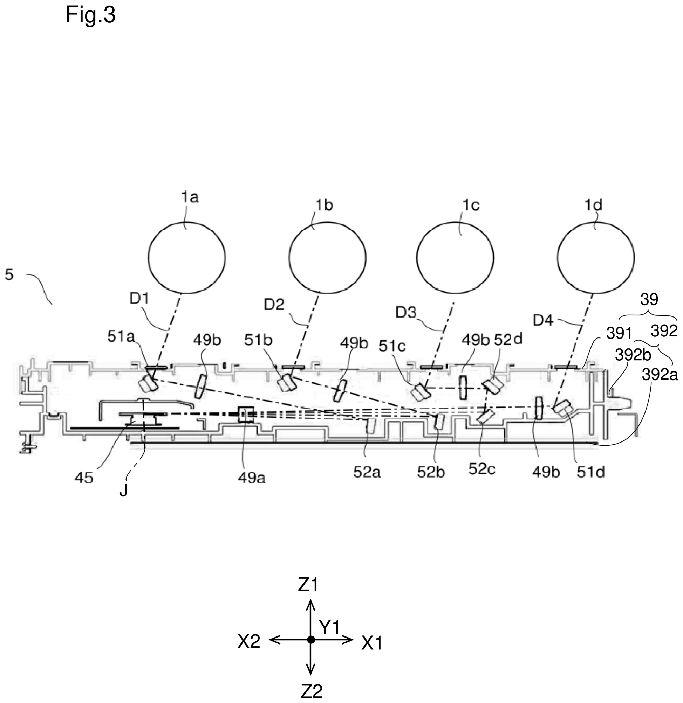

FIG. 2 is a top view of the optical scanning device 5 in a state where a lid portion 391 is detached. FIG. 3 is a cross-sectional side view illustrating an inner structure of the optical scanning device 5. Note that a part of FIG. 3 schematically illustrates a structure of members, and does not strictly illustrate shapes and positional relationship of the members.

Note that in the following description, the main scanning direction (Y1-Y2 direction) means a longitudinal direction of each reflection mirror 52a to 52d. In addition, the main scanning direction (Y1-Y2 direction) is the same as the direction in which the rotation axis of each photosensitive drum 1a to 1d extends or the front and back direction of the image forming apparatus 100. The sub scanning direction (Z1-Z2 direction) means the direction parallel to a rotation axis J of a polygon mirror 45, and is the same as the up and down direction of the image forming apparatus 100. In addition, the left and right direction (X1-X2 direction) means the direction perpendicular to the main scanning direction (Y1-Y2 direction) and the sub scanning direction (Z1-Z2 direction), and is the same as the direction in which the reflection mirrors 52a to 52d are arranged in parallel.

The optical scanning device 5 outputs (emits) a plurality of (in this embodiment, four) laser beams D1 to D4, which are modulated by each image signal, to the photosensitive drums 1a to 1d, so as to form electrostatic latent images in which charges are attenuated by exposing the surfaces of the photosensitive drums 1a to 1d, respectively.

The optical scanning device 5 includes a chassis 39, an optical source unit 26, a collimator lens 41, a cylindrical lens (not shown), a first aperture 43 and a second aperture 44, the polygon mirror 45, a plurality of scanning lenses 49a and 49b, output mirrors 51a to 51d, and the reflection mirrors 52a to 52d.

The chassis 39 includes the lid portion 391 and a casing 392. The lid portion 391 covers an opened top surface of the casing 392. The casing 392 is formed in a substantially square shape in a top view. The casing 392 houses the collimator lens 41, the cylindrical lens (not shown), the first aperture 43 and the second aperture 44, the polygon mirror 45, the plurality of the scanning lenses 49a and 49b, the output mirrors 51a to 51d, and the reflection mirrors 52a to 52d.

The casing 392 includes a bottom wall portion 392a and a peripheral wall portion 392b. The bottom wall portion 392a extends in directions crossing the rotation axis J of the polygon mirror. In this embodiment, the bottom wall portion 392a extends in directions perpendicular to the rotation axis J of the polygon mirror 45. The peripheral wall portion 392b protrudes in an upward direction Z1 from the periphery of the bottom wall portion 392a, and the top end thereof contacts the lid portion 391. The peripheral wall portion 392b surrounds the collimator lens 41, the cylindrical lens (not shown), the first aperture 43 and the second aperture 44, the polygon mirror 45, the plurality of the scanning lenses 49a and 49b, the output mirrors 51a to 51d, and the reflection mirrors 52a to 52d from outside in a radial direction.

The optical source unit 26 has a plurality of light emission points for emitting laser beams, and has a plurality of laser diodes 261a fixed to an outer periphery surface of the peripheral wall portion 392b. The plurality of laser diodes 261a are arranged in a row. Each of the laser diodes 261a has a multiple beam structure capable of outputting a plurality of laser beams, including two or more light emission elements each of which is constituted of a semiconductor laser, and the plurality of laser diodes can be activated separately. In this way, because the laser diode 261a has a multiple beam structure, the optical scanning device 5 can support both high speed and high definition when the electrostatic latent image is formed.

In this embodiment, the laser diodes 261a and the collimator lenses 41 are disposed at four positions each corresponding to the image forming units Pa to Pd. The laser diodes 261a emit the laser beams D1 to D4 corresponding to the image forming units Pa to Pd, respectively (see FIG. 3). The collimator lens 41 collimates the laser beams D1 to D4 emitted from the laser diodes 261a to be substantially parallel light beams (parallel light beams).

The polygon mirror 45 reflects the plurality of laser beams D1 to D4 emitted from the laser diodes 261a so as to scan the scanned surfaces of the photosensitive drums (image carriers) 1a to 1d corresponding to the laser diodes 261a, respectively. In this way, the single polygon mirror 45 can scan the plurality of the photosensitive drums 1a to 1d, and hence the number of components can be reduced, so that production cost of the optical scanning device 5 can be suppressed. In addition, the polygon mirror 45 is covered with a mirror cover 45a (see FIG. 3). In this way, it is possible to suppress a decrease in reflectivity due to adhesion of particulates to the mirror surface of the polygon mirror 45.

The cylindrical lens (not shown) has a predetermined refracting power only in the sub scanning direction of the laser beams D1 to D4, so as to collect the laser beams D1 to D4, respectively.

The first aperture 43 and the second aperture 44 are disposed between the collimator lens 41 and the cylindrical lens (not shown). The first aperture 43 and the second aperture 44 restrict the optical path width of the laser beam D1 to D4 that passes through the collimator lens 41 and enters the cylindrical lens. In this embodiment, the first apertures 43 are disposed at four positions corresponding to the laser diodes 261a, respectively. In addition, the second aperture 44 is disposed at one position common to the optical source units 26 (light sources). In this way, it is possible to reduce the number of components of the second aperture 44 so as to suppress production cost of the optical scanning device 5.

The scanning lenses 49a and 49b are each a lens having fθ characteristics. The scanning lens 49a is disposed at one position common to the photosensitive drums 1a to 1d. The scanning lenses 49b are disposed at four positions corresponding to the photosensitive drums 1a to 1d (see FIGS. 2 and 3). The scanning lenses 49a and 49b are disposed between the polygon mirror 45 and the photosensitive drum 1a to 1d, so as to focus the laser beam D1 to D4 reflected by the polygon mirror 45 to the scanned surface of the corresponding photosensitive drum (image carrier) 1a to 1d.

The laser beams D1 to D4 are deflected by the polygon mirror 45 in the main scanning direction (Y1-Y2 direction). The laser beams D1 to D4 deflected by the polygon mirror 45 are respectively led to the output mirrors 51a to 51d via optical elements such as the scanning lenses 49a and 49b and the reflection mirrors 52a to 52d. Further, the laser beams D1 to D4 reflected by the output mirrors 51a to 51d irradiate the photosensitive drums 1a to 1d of the image forming units Pa to Pd, respectively.

### [3. Structure of Optical Source Unit 26]

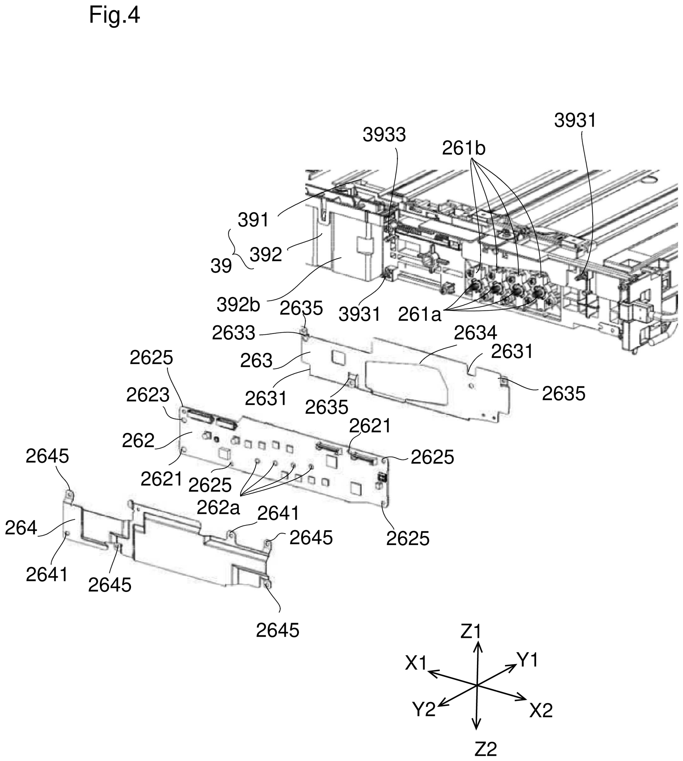

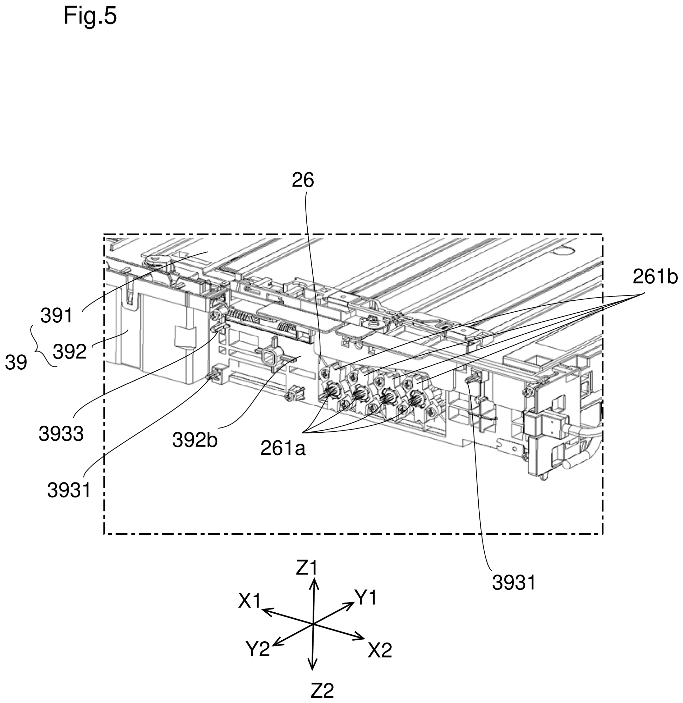

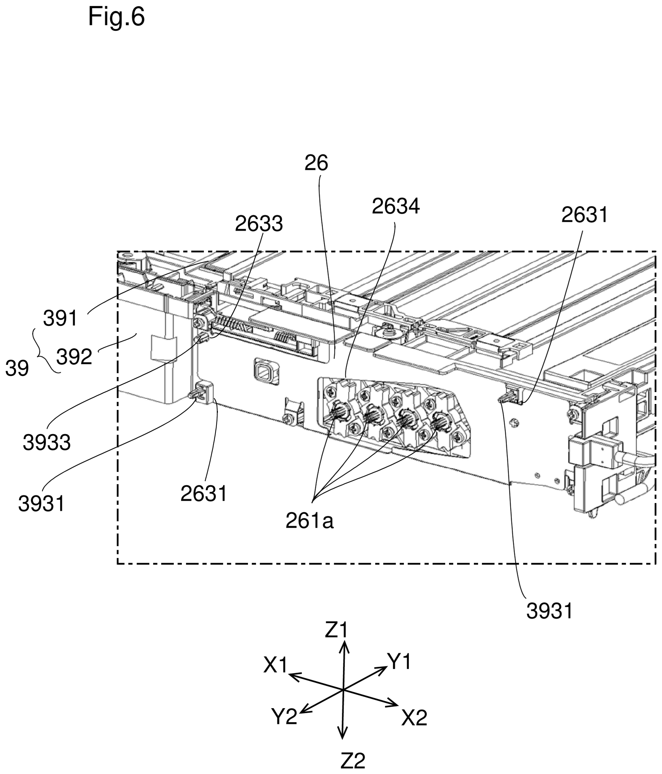

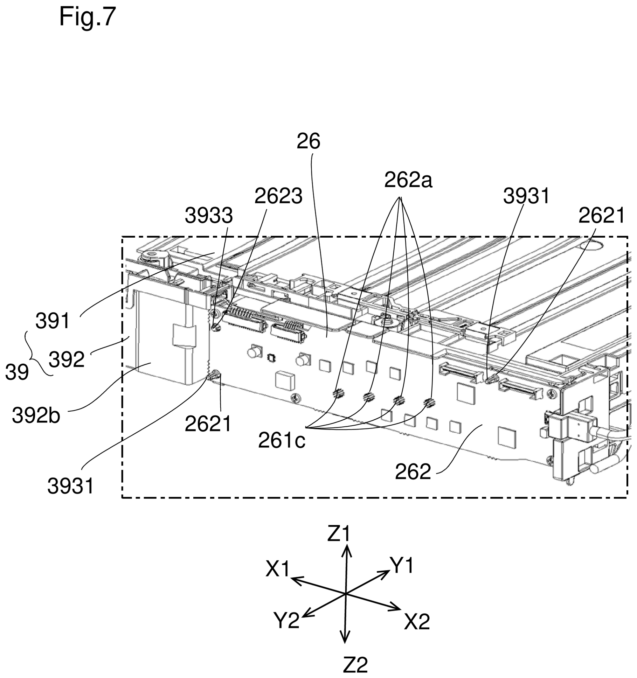

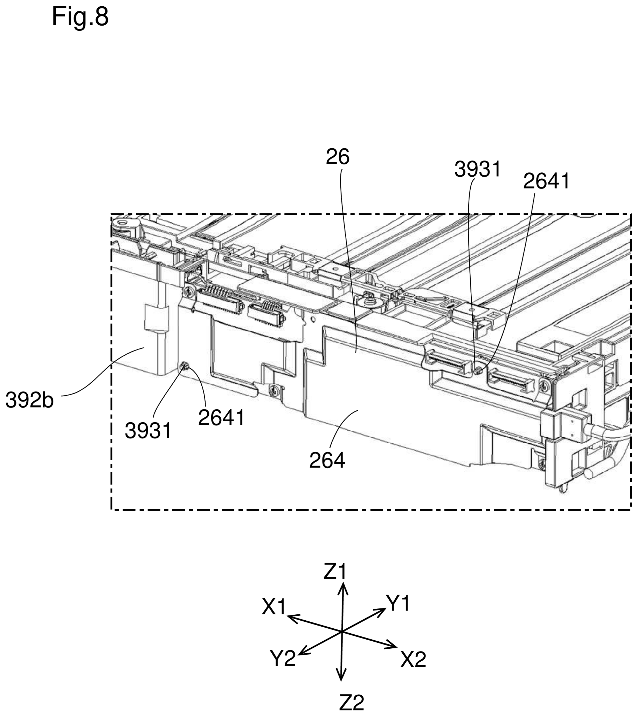

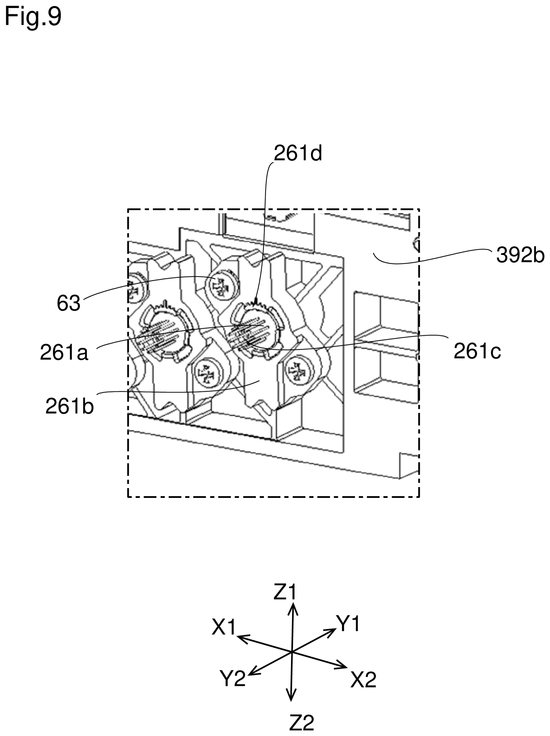

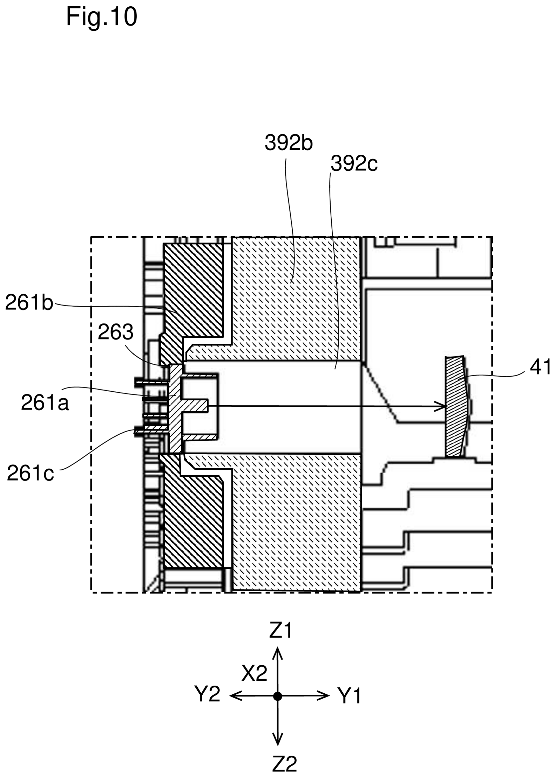

FIG. 4 is an exploded perspective view of the optical source unit 26 of the optical scanning device 5, and FIGS. 5 to 8 are enlarged perspective views of the optical source unit 26 and its vicinity of the optical scanning device 5. In FIG. 5, a circuit board 262, a ground cover 263, and a protection cover 264 are detached. In FIG. 6, the circuit board 262 and the protection cover 264 are detached. In FIG. 7, the protection cover 264 is detached. In addition, FIG. 9 is an enlarged perspective view of the laser diode 261a and its vicinity. FIG. 10 is an enlarged cross-sectional side view illustrating the laser diode 261a and its vicinity.

The optical source unit includes the laser diodes 261a, brackets 261b, the circuit board 262, the ground cover 263, and the protection cover 264. Each of the laser diodes 261a is held by the bracket 261b and fixed to the peripheral wall portion 392b. Each of the laser diodes 261a has a plurality of terminals 261c to be inserted and mounted on the circuit board 262.

The bracket 261b is made of metal, and has a holding hole 261d for holding the laser diode 261a. The laser diode 261a is held in the holding hole 261d. In this embodiment, the laser diode 261a is lightly pressed to fit in the holding hole 261d. Because the bracket 261b is made of metal, heat of the laser diode 261a is efficiently dissipated to the peripheral wall portion 392b via the bracket 261b.

In addition, because the laser diode 261a is fixed to the bracket 261b by light press-fitting, it is easy to perform optical axis adjustment by rotating the laser diode 261a in the circumferential direction with respect to the optical axis. In addition, it is easy to finely adjust the direction of the laser beam emitted from the laser diode 261a with respect to the collimator lens 41. In addition, by moving the laser diode 261a in the main scanning direction (Y1-Y2) with fine adjustment, the laser diode 261a can be fixed at an appropriate position with respect to the focal position of the collimator lens 41.

In addition, light entering holes 392c in which the laser diodes 261a are disposed are formed in the peripheral wall portion 392b of the casing 392 (see FIG. 10). In this embodiment, the light entering hole 392c penetrates the peripheral wall portion 392b in the main scanning direction (Y1-Y2). The bracket 261b is fixed to the outer periphery surface of the peripheral wall portion 392b, in the state where the laser diode 261a is inserted in the light entering hole 392c formed in the peripheral wall portion 392b.

The bracket 261b is fastened to the peripheral wall portion 392b with screws 63 at two positions sandwiching the holding hole 261d. By removing the screws 63, the laser diode 261a can be easily detached from the peripheral wall portion 392b, and the laser diode 261a can be maintained or replaced by itself.

The circuit board 262 and the protection cover 264 are positioned by guide members 3931 protruding from the outer periphery surface of the peripheral wall portion 392b. In addition, the circuit board 262 and the ground cover 263 are guided by a cover guide member 3933 protruding from the outer periphery surface of the peripheral wall portion 392b. In this embodiment, the guide members 3931 are disposed at two positions, and the cover guide member 3933 is disposed at one position.

The circuit board 262 is fixed to the peripheral wall portion 392b from outside of the laser diodes 261a. In addition, the circuit board 262 has mounting holes 262a in which terminals 261c of the laser diodes 261a are inserted, which extend to the opposite side of the laser beam emitting direction. The circuit board 262 has board insertion holes 2621 in which the guide members 3931 are inserted, a board guide hole 2623 in which the cover guide member 3933 is inserted, and substrate screw holes 2625. The board insertion holes 2621 are disposed at two positions, and the board guide hole 2623 is disposed at one position.

The circuit board 262, on which various electronic components can be mounted, is a printed circuit board including a board main body having electrical insulation properties, and conductive wirings formed on the surface or inside of the board main body. In this embodiment, the circuit board 262 has a rectangular plate-like shape. In addition, an integrated circuit (IC) constituting a driver circuit, a signal processing circuit, and the like is also mounted on the circuit board 262.

The ground cover 263 is a metal plate that is disposed between the circuit board 262 and the peripheral wall portion 392b, and is grounded. The ground cover 263 has notch parts 2631, a ground cover insertion hole 2633, an opening part 2634, and ground cover screw holes 2635. The notch parts 2631 are disposed at two positions, and the ground cover insertion hole 2633 is disposed at one position.

The notch part 2631 is formed by notching the rim of the ground cover 263, and the guide members 3931 is inserted in the notch part 2631. The ground cover insertion hole 2633 is formed at a corner of the ground cover 263, and the cover guide member 3933 is inserted in the ground cover insertion hole 2633. The laser diodes 261a are disposed in the opening part 2634, and the terminals 261c of the laser diodes 261a are exposed to the outside of the ground cover 263 through the opening part 2634, in the state where the ground cover 263 is fixed to the outer surface of the peripheral wall portion 392b.

The protection cover 264 is a metal plate that covers and protects the circuit board from outside. The protection cover 264 includes protection cover insertion holes 2641 and protection cover screw holes 2645. The guide members 3931 are inserted in the protection cover insertion holes 2641. The protection cover insertion holes 2641 are disposed at two positions.

The circuit board 262, the ground cover 263, and the protection cover 264 are integrally fixed to the peripheral wall portion 392b with screws, in the state where positions of the substrate screw holes 2625, the ground cover screw holes 2635, and the protection cover screw holes 2645 are matched. In this embodiment, they are fixed with screws at four positions.

### [4. Structure of Guide Member 3931]

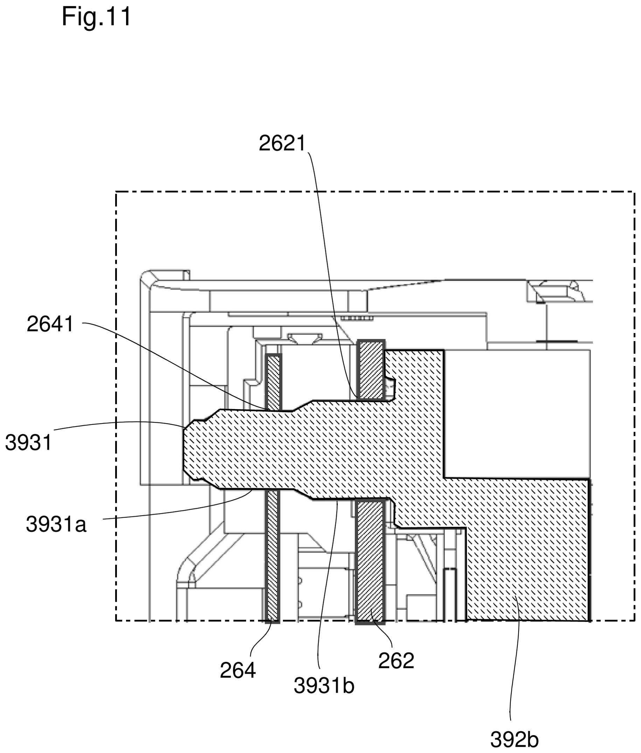

FIG. 11 is an enlarged cross-sectional side view illustrating the guide member 3931 and its vicinity. The guide members 3931 protrude from the outer periphery surface of the peripheral wall portion 392b, and are inserted in the notch parts 2631 of the ground cover 263, the board insertion holes 2621 of the circuit board 262, and the protection cover insertion holes 2641 of the protection cover 264. In this way, the ground cover 263, the circuit board 262, and the protection cover 264 are easily positioned, and assembling workability of the optical scanning device 5 is improved.

In addition, in this embodiment, the guide members 3931 are disposed at a plurality of positions, and the notch parts 2631, the board insertion holes 2621, and the protection cover insertion holes 2641 are respectively disposed at a plurality of positions, corresponding to the guide members 3931. By the plurality of guide members 3931, the circuit board 262 and the protection cover 264 can be stably guided, and can be easily positioned. In this case, the plurality of guide members 3931 work also as rotation stops for the circuit board 262 and the protection cover 264.

In addition, a distal end of the guide member 3931 is positioned on the opposite side of the laser beam emitting direction with reference to a distal end of the terminal 261c of the laser diode 261a. In this way, when inserting the terminals 261c of the laser diode 261a into the mounting hole 262a of the circuit board 262, the state where the guide members 3931 are inserted into the board insertion holes 2621 of the circuit board 262 is achieved. Therefore, the terminals 261c of the laser diode 261a can be easily inserted into the mounting hole 262a, and workability when mounting the laser diode 261a is improved. In this way, assembling workability of the optical scanning device 5 is more improved.

In addition, even in the case where the guide members 3931 are inserted into the board insertion holes 2621 of the circuit board 262, after adjusting the position of the laser diode 261a with respect to the optical system of the polygon mirror 45, the terminals 261c of the laser diode 261a can be easily inserted into the mounting hole 262a.

In addition, the guide members 3931 has a small diameter part 3931a and a large diameter part 3931b. The small diameter part 3931a is positioned on the distal end side of the guide member 3931, and has an outer diameter smaller than an inner diameter of the board insertion hole 2621. The large diameter part 3931b is positioned on the proximal end side of the guide members 3931, and has an outer diameter larger than the small diameter part 3931a.

In this way, when inserting the terminals 261c of the laser diode 261a into the mounting hole 262a, the small diameter part 3931a is positioned in the board insertion hole 2621. At this time, the inner diameter of the board insertion hole 2621 is larger than the outer diameter of the small diameter part 393 1a, and there is a space between the guide member 3931 and the inner edge of the board insertion hole 2621. In this way, the terminals 261c can be easily inserted into the mounting hole 262a while moving the circuit board 262. Therefore, workability when mounting the laser diode 261a is more improved. Note that in this embodiment, the cover guide member 3933 is inserted into the board guide hole 2623 of the circuit board 262. For this reason, the circuit board 262 moves while pivoting around the cover guide member 3933 as the center.

In addition, in this embodiment, the outer diameter of the large diameter part 3931b is substantially the same as the inner diameter of the board insertion hole 2621. In this way, after the terminal 261c is inserted into the mounting hole 262a, when the circuit board 262 is further pushed in, the large diameter part 3931b is inserted into the board insertion hole 2621. In this way, when the board insertion hole 2621 passes through the small diameter part 3931a, the position of the circuit board 262 is adjusted, and when the large diameter part 3931b is inserted into the board insertion hole 2621, the position of the circuit board 262 is fixed. Therefore, assembling workability of the optical scanning device 5 is more improved. Note that the outer diameter of the large diameter part 3931b may be a little smaller than the inner diameter of the board insertion hole 2621.

In addition, in this embodiment, the outer diameter of the small diameter part 3931a is substantially the same as the inner diameter of the protection cover insertion hole 2641. After the large diameter part 3931b is inserted into the board insertion hole 2621, the small diameter part 3931a is inserted into the protection cover insertion hole 2641. At this time, the position of the protection cover 264 is fixed. Therefore, assembling workability of the optical scanning device 5 is more improved. In addition, the guide member 3931 can be used as a positioning member for both the circuit board 262 and the protection cover 264, so that saving of space and reduction of production cost can be achieved. Note that the outer diameter of the small diameter part 3931a may be a little smaller than the inner diameter of the protection cover insertion hole 2641.

Other than that, the present disclosure is not limited to the embodiments described above, and can be variously modified within the scope of the present disclosure without deviating from the spirit thereof. For instance, the laser diodes 261a are disposed at four positions corresponding to the image forming units Pa to Pd in this embodiment, but one laser diode 261a is sufficient for a monochrome image forming apparatus 100. In addition, an arrangement of colors of the laser beams D1 to D4 is not particularly limited.

In addition, the distal end part of the laser diode 261a is in the light entering hole 392c in this embodiment, but the laser diode 261a may not be in the light entering hole 392c as long as the laser beam emitted from the laser diode 261a passes through the light entering hole 392c.

In addition, the laser diode 261a is held in the bracket 261b and is fixed to the peripheral wall portion 392b in this embodiment, but it may possible to form the holding hole for holding the laser diode 261a in the circuit board 262, so that the circuit board 262 can hold the laser diode 261a. In this case, the bracket 261b is eliminated, and the production cost can be reduced.

The present disclosure can be applied to an optical scanning device that forms a latent image on a scanned surface by exposing and scanning.

## Claims

1. An optical scanning device comprising:
an optical source unit (26) for emitting a laser beam (D1, D2, D3, D4);
a polygon mirror (45) configured to rotate about a rotation axis (J) extending and reflects the laser beam emitted from the optical source unit, so as to scan a circumferential surface of an image carrier (1a, 1b, 1c, 1d) in a main scanning direction (Y1-Y2); and
a casing (392) configured to house the polygon mirror, wherein
the casing includes a bottom wall portion (392a) extending in a direction crossing the rotation axis of the polygon mirror, and a peripheral wall portion (392b) protruding from a periphery of the bottom wall portion so as to surround the polygon mirror from outside in a radial direction,
the optical source unit includes a laser diode (261a) having a plurality of light emission points for emitting the laser beams, and is fixed to an outer circumferential surface of the peripheral wall portion, and a circuit board (262) having a mounting hole (262a) for inserting terminals of the laser diode extending in a direction opposite to the laser beam emitting direction,
the peripheral wall portion includes a guide member (3931) protruding from the outer circumferential surface, so as to be inserted in a board insertion hole (2621) formed in the circuit board, and
a distal end of the guide member is positioned on an opposite side of the laser beam emitting direction with respect to a distal end of the laser diode terminal.

2. The optical scanning device according to claim 1, wherein the guide member includes a small diameter part (3931a) disposed on a distal end side, having an outer diameter smaller than an inner diameter of the board insertion hole, and a large diameter part (3931b) disposed on a proximal end side, having an outer diameter larger than the small diameter part.

3. The optical scanning device according to claim 2, wherein
the optical source unit further includes a protection cover (264) configured to cover and protect the circuit board from outside,
the guide member is inserted into a protection cover insertion hole (2641) formed in the protection cover, and
the small diameter part has an outer diameter being substantially the same as an inner diameter of the protection cover insertion hole.

4. The optical scanning device according to claim 1 or 2, wherein
a plurality of the guide members are disposed, and a plurality of the board insertion holes are disposed corresponding to the guide members,
a plurality of the laser diodes are arranged in a row, and
one of the board insertion holes is a round hole, while the other board insertion hole is a long hole elongated in a direction where the laser diodes are arranged.

5. The optical scanning device according to claim 1 or 2, wherein
the optical source unit further includes a ground cover (263) disposed between the circuit board and the peripheral wall portion, the ground cover being grounded, and
the peripheral wall portion includes a cover guide member (3933) protruding from the outer circumferential surface so as to be inserted into a ground cover insertion hole (2633) formed in the ground cover.

6. The optical scanning device according to claim 1 or 2, wherein
the optical source unit further includes a bracket (261b) having a holding hole (261d) for holding the laser diode, and
the bracket is fixed to the outer circumferential surface of the peripheral wall portion, in a state where the laser diode is inserted in a light entering hole (392c) formed in the peripheral wall portion.

7. The optical scanning device according to claim 1 or 2, wherein the circuit board has a holding hole (261d) for holding the laser diode, and is fixed to the outer circumferential surface of the peripheral wall portion, in a state where the laser diode is inserted in a light entering hole (392c) formed in the peripheral wall portion.

8. An image forming apparatus (100) comprising:
an image carrier having a surface on which a photosensitive layer is formed,
a charging device (2a, 2b, 2c, 2d) configured to charge the image carrier at a predetermined surface potential; and
the optical scanning device according to claim 1 or 2, configured to expose the surface of the image carrier charged by the charging device, so as to form an electrostatic latent image in which a charge is attenuated.
